# EUROPEAN PATENT APPLICATION

(11) **EP 2 587 325 A2**
(43) Date of publication of application: **01.05.2013**
(21) Application number: 12190244.9
(22) Date of filing: 26.10.2012
(51) Int. Cl.: G05B 19/409

(54) **Wood machining method and apparatus**

(30) Priority: 28.10.2011 IT MO20110276
(71) Applicant: SCM Group S.p.A., 47900 Rimini (IT)
(72) Inventor: Ratti, Federico, 47824 Poggio Berni (Rimini) (IT)
(74) Representative: Villanova, Massimo

(57) **Abstract**

A method for assisting an operator to enter data into a computer memory connected to a control unit (12) that governs an apparatus (2) for machining a workpiece (1) made of wood or a material similar to wood, according to which, on a screen of a touchscreen, a pictogram that represents the workpiece, a touch icon that represents a crosspiece of a supporting plane of the workpiece, and another touch icon that represents a workpiece-fixing member carried by the crosspiece are represented; the position on the screen of the touch icons determines the desired position of the crosspiece and of the fixing member for fixing on the supporting plane; a voice user interface supplies a prompt to confirm the correct position of the touch icons.

## Description

### Background of the invention

The invention relates to a method and an apparatus for machining wood or wood similar material.

Specifically but not exclusively, the invention can be advantageously applied to a numerically controlled machining centre for machining panels made of wood or wood similar material.

One of the problems of numerically controlled machining centre for machining wood is that of setting up the machining centre before the operating group performs the various machinings performed on a workpiece made of wood.

In this preparatory step it may be necessary to insert into the computer memory associated with the programmable control unit governing the machining centre the data relating to configuring the supporting plane of the workpiece in function of the features of the workpiece (in particular of the dimensions of the workpiece) before the operating group performs the programmed machinings on the workpiece.

This preparatory step requires particular attention from the operator entrusted with setting up the apparatus. Further, it is necessary for the operator to be previously trained to learn the data-entry procedure. Accordingly, the preparatory step of wood-machining centre has to be conducted by expert personnel and entails, in all cases, a relatively high risk of errors in entering the data required for starting machining, such as, for example, the data relating to configuring the supporting plane.

In particular, machining centres are known in which a resting plane of a wood panel comprises locking means for retaining the workpiece to the resting plane in a firm and stable manner during machining. Such locking means can comprise, for example, sucking means that is able to generate a vacuum for retaining the workpiece in a work position on the resting plane. The resting plane can comprise a plurality of crosspieces, extending along the horizontal Y axis, supported slidably on longitudinal beams extending along the main horizontal X axis of the machine. Each crosspiece is provided with one, two or more suction units, each having an upper surface that defines the resting plane of the panel. The suction locking system comprises conduits associated with the crossbeams and leading onto the suction units for fixing the panel by air suction.

In the set up step, depending on the dimensions of the panel to be machined and/or the machinings to be performed thereupon, the crosspieces are adjusted at a mutual distance along the main X axis, whilst each suction unit is slidably positioned on the corresponding crosspiece along the normal Y axis to the X axis.

Adjusting the position of the crosspieces and of the suction units can be performed manually or automatically, on the basis of the desired values of the coordinates of the elements to be positioned in the axes X and Y. In general, these desired values have to be entered in a computer memory associated with the programmable control unit that governs the machining centre.

This enter can be made by an operator using a user interface, for example by using a keyboard and a display. For the operator, this involves significant effort and the utmost attention to ensure that the configuration data of the supporting plane are entered correctly. As a result setting up the machining centre is time-consuming and there risks in entering data are not insignificant.

### Summary of the invention

One object of the invention is to improve the prior art in one or more of the aspects disclosed above.

One advantage is to provide a method for assisting an operator to enter data into a computer memory connected to a control unit that governs an apparatus for machining a workpiece made of wood or a wood similar material.

One advantage is to facilitate setting up the supporting plane of a workpiece in a numerically controlled wood machining centre.

One advantage is to reduce the risk of error during the step of entering data relating to the desired positioning of the elements (crosspieces and workpiece locking means) of a supporting plane of the workpiece in a numerically controlled wood machining centre.

One advantage is to make available a method for facilitating the implementation of a numerically controlled machining centre for machining a workpiece made of wood or a wood similar material, in which an operator is assisted in entering data relating to the correct configuration of the supporting plane of the workpiece.

One advantage is to enable the configuration data of the supporting plane of the workpiece to be entered correctly either by a non-expert operator.

One object of the present invention is to devise an apparatus, which is constructionally simple and cheap, that is able to implement the aforesaid method.

Such objects and advantages and still others are achieved by the method and by the apparatus according to any one of the claims set out below.

In one embodiment, the method comprises the step of showing, on a screen, a pictogram that represents the workpiece, an icon that represents a crosspiece of a supporting plane of the workpiece, and another icon that represents a fixing member carried by the crosspiece, the step of determining the actual desired position of the crosspiece and of the fixing member for fixing on the supporting plane on the basis of the position on the screen of the icons, and the step of prompting, with a voice command via a voice user interface, confirmation of the position of the icons.

### Brief description of the drawings

The invention can be better understood and implemented with reference to the attached drawings that illustrate a non-limiting embodiment thereof.

Figure 1 is a schematic top plan view of a machining centre for panels.

Figure 2 is a side view of figure 1.

Figure 3 illustrates a video page, on a screen of a graphic user interface, used for guiding an operator in entering data during the setting up of a machining centre for panels.

### Detailed description

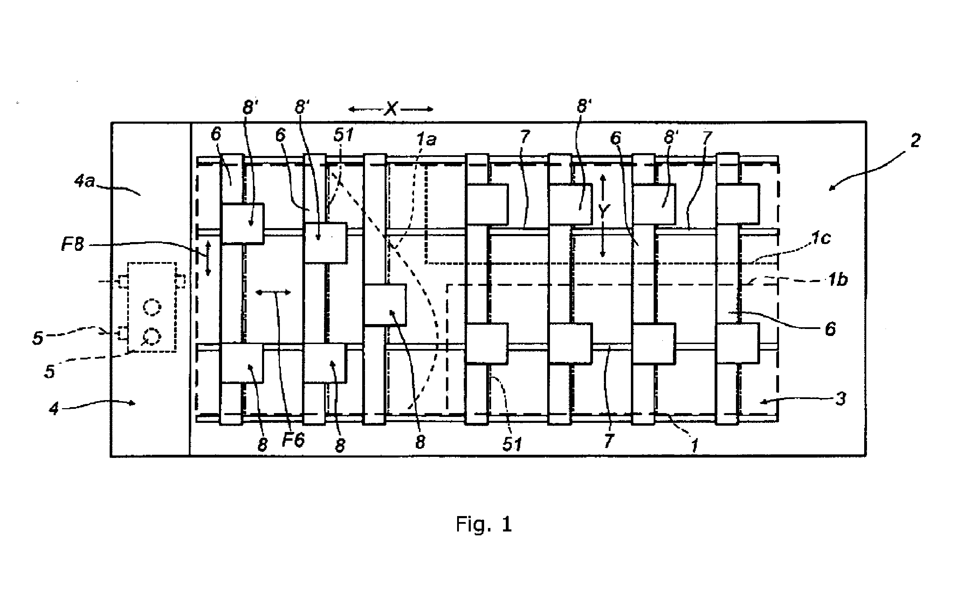

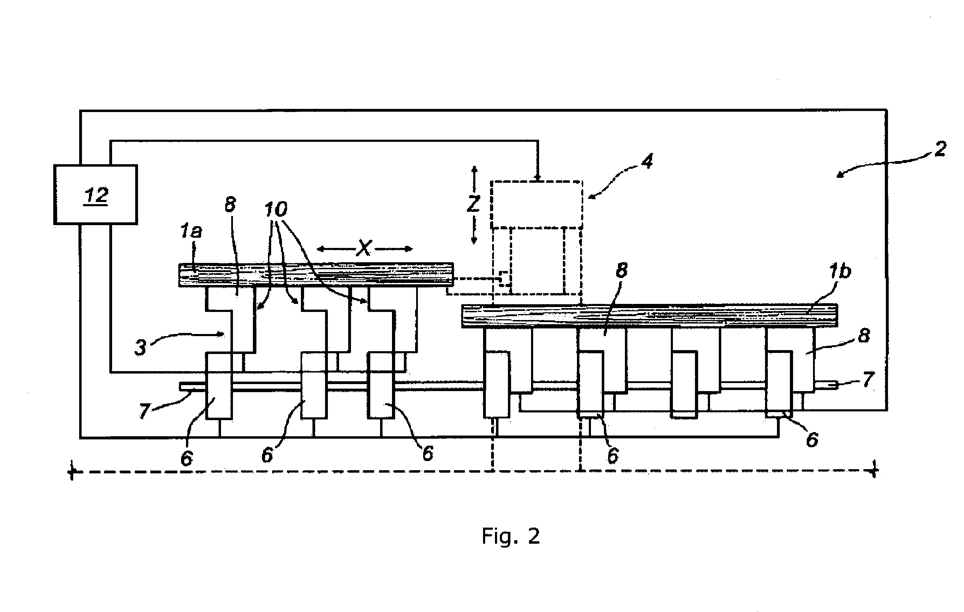

With reference to the aforesaid figures 1 and 2, with 1 a workpiece (unmachined panel) has been indicated and with 2 overall an apparatus for machining workpieces has been indicated that is in particular made of wood or a wood similar material. In the specific case, the apparatus comprises a numerically controlled machining centre for panels made of wood or a wood similar material. The apparatus 2 may be made for different machinings on the workpiece 1, for example for obtaining the machined workpieces 1a, 1b and 1c (panels), in particular for machining by removing chips (for example by milling, vertical and horizontal drilling, cuts, etc).

The apparatus 2 (machining centre) comprises a supporting plane (horizontal resting plane 3) for at least one workpiece 1 (unmachined panel) and at least one operating unit 4, in which the supporting plane and the operating unit 4 are able to perform movements in relation to one another.

The operating unit 4 may be supported, as in the specific example, by a portal structure 4a. The structure 4a may be movable along the three main axes X, Y, Z. The operating unit 4 will be provided with machining tools machining the unmachined panel 1 to obtain at least one machined workpiece 1a, 1b or 1c. Each unit 4 will be arranged, in particular, above the resting plane 3.

An electronic control unit 12 is configured for governing the machining apparatus 2, in particular for controlling at least the operating unit 4. In particular the electronic control unit 12 may be programmed to control the resting plane 3 and the operating units 4 in such a manner as to coordinate the corresponding movements thereof in order to perform the programmed operations. In general, the plane 3 and the units 4 may be reciprocally movable along at least three main movement axes (X, Y, Z) through control by the control unit.

The supporting plane comprises a plurality of crosspieces 6 (in the shape of bars) supported by a base formed, for example, by longitudinal beams 7. Each crosspiece 6 has at least one fixing member for fixing the workpiece in a work position on the supporting plane. Each fixing member may comprise, as in the specific case, a suction unit 8 having an upper surface 8a that defines the resting plane 3 for the workpiece 1. Each suction unit 8 will be connected to sucking means (known and not illustrated) configured for generating a vacuum. This vacuum will operate on each suction unit 8 to lock the workpiece 1 stably. The locking means of the workpiece may comprise (in addition or alternatively to the suction locking means constituted by the suction units 8) mechanical clamping means or the jaw or clamp type or of yet another type.

Each crosspiece 6 may be slidably supported on the longitudinal beams 7 (parallel to one another) in such a manner as to enable the crosspieces 6 to be positioned stably and in relation to one another along the longitudinal axis X of the machining centre 2 (see arrows F6). After adjustment, the crosspieces 6 may be locked permanently in position. The position of each crosspiece 6 along the axis X may be adjusted by manual sliding (by an operator) on the beams 7, or automatically by an automatic movement system (that is of known type and is not shown) that is connected to the control unit 12 to move the crosspieces 6 along the axis X independently of one another.

Similarly, each suction unit 8 may be slidably adjustable along the corresponding crosspiece 6, i.e. along the transverse axis Y arranged transversely (perpendicularly) to the first axis X (see arrows F8). Each suction unit 8, 8' will be, in particular, slidably coupled with the corresponding crosspiece 6 on sliding guides and may be moved, for example, by a kinematic chain system 51. The position of each suction unit along the axis Y may be adjusted by manual sliding (performed by an operator) on the respective crosspiece 6, or automatically by an automatic movement system (for example by linking the kinematic system 51 to the control unit 12) connected to the control unit 12 to move the suction units along the axis Y independently from one another.

It is possible to provide, as in this specific example, for each suction unit 8, 8' being provided with movement means 10 along a third vertical axis Z, to move the height of corresponding upper surface 8a defining the resting plane of the panel 1, thus determining raising or lowering of the panel 1. The vertical movement means 10 may be, for example, the one disclosed in patent publication EP 1872919, which is included here for reference.

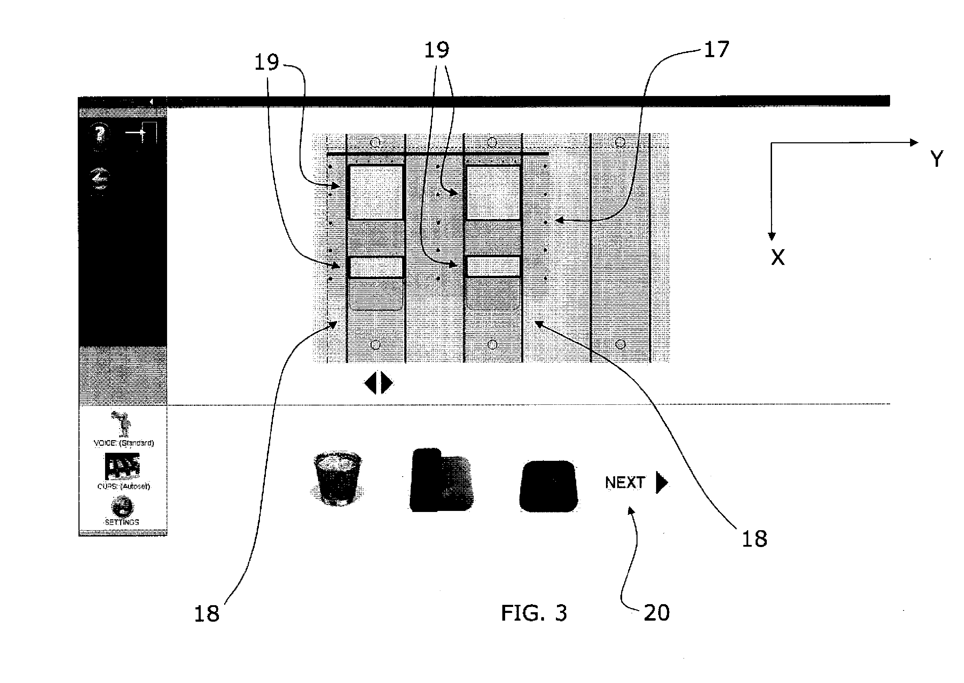

Below, with particular reference to figures 3 and 4, a procedure for entering data relating to the desired position of the crosspieces 6 and of the suction units 8, 8' on the supporting plane is disclosed. This procedure implements a method for assisting an operator to enter data into the control unit.

The programmable control unit 12 is connected to a graphic user interface of the apparatus 2. The control unit 12 may be further connected to a voice user interface of the apparatus 2.

The control unit may be programmed for showing on a screen of the graphic user interface a video page prompting the operator to choose between two or more methods of loading data relating to the configuration of the supporting plane, i.e. of the positioning data (for example coordinate values X and Y) of crosspieces and fixing members for fixing the workpiece on the supporting plane. In particular, the operator can choose between at least one automatic loading method, for example by selecting a preset touch icon, and a manual loading method, for example by selecting another touch icon. Alternatively, or in addition, to selection by touchscreen, it is possible to provide for the use of a voice signal via the voice user interface, to prompt the operator to select one of two or more data-loading methods. The selection may be made by the operator by touching one of the touch icons on the touchscreen and/or by a voice command which is selectable from a plurality of voice commands.

The procedure disclosed below refers to the manual loading method. It is therefore assumed that in the specific case disclosed there the operator chooses manual mode. In this case (manual data enter), the electronic computer memory connected to the control unit will thus be set up to receive the data on positioning the elements of the supporting plane. Such data may comprise, for example, for each fixing member (suction unit 8, 8'), the coordinates of the fixing member along the (horizontal) axes X and Y parallel to the (horizontal) supporting plane. In particular amongst the positioning data that are storable in the computer memory there will be X-data, one for each crosspiece 6, associated with the desired positioning of the various crosspieces along the longitudinal direction (X axis), i.e. the X coordinates of the desired positions of the crosspieces considering a predefined zero point (at an end angle) of the supporting plane. Amongst the positioning data that are storable in the computer memory there will also be Y-data, one for each fixing member, associated with the desired positioning of the fixing members along the transverse direction (Y axis), i.e. the Y coordinates of the desired positions of the various fixing members on the respective crosspieces, always considering the set zero point of the supporting plane as a reference point.

Before the entering of the X-data and the Y-data configuring the supporting plane (i.e. the positioning data of the movable elements of the plane), a step is provided of loading the data relating to the dimensions of the workpiece. The workpiece may comprise, for example, a panel and the data relating to the dimensions of the workpiece may comprise at least the length (in the direction of the X axis) and the width (in the direction of the Y axis) of the panel. The data enter procedure for entering data relating to the dimensions of the workpiece in the computer memory may comprise any data enter procedure.

The X-data enter procedure and the Y-data enter procedure in the computer memory may comprise the following procedure steps. In one step, on a screen of a touchscreen of the graphic user interface, a video page is shown comprising a pictogram 17 that represents the workpiece (figure 4). In the specific case the workpiece is a panel (in the specific example of rectangular shape) and the pictogram 17 comprises a drawing of the panel (a rectangle) shown in a top plan view.

The dimensions of the pictogram 17 may reproduce, for example to scale, the dimensions (known and already entered in the memory) of the panel. The control unit 12 may be programmed for automatically positioning on the screen the workpiece pictogram 17 in a set position that corresponds (point by point) to the actual work position of the panel on the supporting plane. In particular, a vertex of the workpiece pictogram 17 in shape of a panel will be situated at a zero point of the screen, whereas the corresponding vertex of the actual panel will be considered to be the zero point of the supporting plane; with the screen two Cartesian coordinates axes will be association in the X direction and in the Y direction that are perpendicular to one another, so that with each pair of X and Y coordinates on the screen a point of the panel can be associated (in the work position on the supporting plane) with corresponding coordinates (for example proportional to a certain scale ratio). In substance, the screen of the touchscreen (or at least a party thereof) reproduces to scale at least part of the supporting plane where the workpiece is arranged in the work position.

The control unit 12 is further programmed to show on the screen, for each crosspiece of the supporting plane, a crosspiece icon 18 representing the crosspiece and, for each fixing member (suction unit), a fixing member icon 19 representing the fixing member. The crosspiece icons 18 and the fixing member icons 19 are of the touch type, being draggable on the screen by means of drag-and-drop performed by the operator. In particular, the aforesaid touch icons (crosspiece icons 18 and fixing member icons 19) will be superimposable on the workpiece pictogram 17 by means of drag-and-drop.

Each crosspiece icon 18 extends in length in the screen direction Y and is movable by drag-and-drop in the screen direction X (transverse to the direction Y). In particular, each crosspiece icon 18 will have the possibility of performing movements with a sole degree of freedom (like each crosspiece 6). Also the crosspiece icons 18 may reproduce the plan conformation of the actual crosspieces 6, just like the pictogram 17 with respect to the workpiece and, in particular, with the same scale ratio.

Each fixing member icon 19 is arranged on a respective crosspiece icon 18 and will remain associated with the corresponding crosspiece icon during movement of the latter in the screen direction X. Each fixing member icon will thus move together with the corresponding crosspiece icon in the screen direction X, just as each fixing member is mounted on a respective crosspiece and is integral therewith in movements along the axis X of the plane.

The number of fixing member icons 19 on each crosspiece icon 18 will correspond to the actual number of similar elements on the supporting plane. Each fixing member icon 19 is further movable by drag-and-drop along the respective crosspiece icon 18 in the screen direction Y, just as each fixing member is slidable on the respective crosspiece.

The operator may thus position the various touch icons 18 and 19 simply and immediately so that the fixing member icons 19 are superimposed on the workpiece pictogram 17 in desired positions. The control unit is programmed to emit an alarm signal to the operator if at least one fixing member icon 19 is at least partially outside the workpiece pictogram 17. The operator can further receive a prompt (for example on the screen or via a voice signal) to move the icon protruding from the pictogram 17.

The control unit may be programmed to determine the X-data and the Y-data of the desired positioning on the supporting plane of the crosspieces 6 and of the suction units 8 and 8', on the basis of the position on the screen of the crosspiece icons 18 and of the fixing member icons 19 that are positioned correctly on the pictogram 17. In practice, the X-data will be the coordinates of the desired positions of the crosspieces 6 in the longitudinal direction X of the plane 3, whereas the Y-data will be the coordinates of the desired positions of the suction units 8, 8' in the transverse direction Y of the plane 3.

The control unit may be programmed to provide a prompt to confirm the desired position of the crosspiece icons 18 and of the fixing member icons 19. Such a prompt may comprise, for example, a confirmation touch icon 20 (for example with the message "NEXT" or "FORWARD" or "CONFIRM" or the like). The prompt may comprise, alternatively or in addition, a voice signal emitted by the voice user interface. The control unit will be further programmed for receiving confirmation of the desired position and for determining (and then entering in the memory) the X-data and the Y-data in response to the aforesaid confirmation. Confirmation may be received via a vocal instruction, through the voice user interface, and/or by means of a signal received in response to a touch on the touchscreen (touch of the icon 20).

The X- data and the Y-data will then be stored in the computer memory and the control unit will update the settings of the apparatus accordingly.

At this point, a corresponding coordinate (of desired position) will be associated in the X axis with one or more crosspieces 6 and a corresponding coordinate (of desired position) will be associated in the Y axis with fixing members. The control unit may be programmed for performing a subsequent apparatus setting-up step, such as, for example, the step of selecting mode (automatic or manual) of actually positioning the movable elements of the supporting plane, using the positioning data entered in the manner disclosed above.

## Claims

1. Method for assisting an operator to enter data into a computer memory connected to a control unit (12) that governs an apparatus (2) for machining a workpiece (1) made of wood or a material similar to wood, said control unit (12) being connected to a graphic user interface, said apparatus (2) having a supporting plane (3) supporting the workpiece (1), said method comprising the steps of:
- showing, on a screen of said graphic user interface, at least one icon representing said supporting plane (3) ;
- supplying, via a voice signal through a voice user interface connected to said control unit, a prompt to confirm the position of said icon on said screen;
- receiving confirmation of the position of said icon;
- determining, on the basis of the position of said icon, one or more data associated with a positioning of said supporting plane (3);
- entering said one or more data in said memory in response to said confirmation.

2. Method according to claim 1, wherein said confirmation comprises a voice instruction received through said voice user interface.

3. Method according to claim 1 or 2, wherein said prompt further comprises a confirmation icon (20), for example a touch icon, displayed on said screen, and/or wherein said confirmation further comprises a signal received in response to a touch on said touchscreen.

4. Method according to any preceding claim, said supporting plane (3) having one or more crosspieces (6) each of which is positionable in said supporting plane (3) along a longitudinal direction (X), each crosspiece (6) extending in a transverse direction (Y) that is transverse to said longitudinal direction (X), each crosspiece having one or more fixing members (8, 8') fixing the workpiece, each fixing member being positionable along the crosspiece (6) in said transverse direction (Y), said screen being the screen of a touchscreen, said at least one icon comprising at least one crosspiece icon (18) representing one of said one or more crosspieces (6) and at least one fixing member icon (19) representing one of said one or more fixing members (8, 8'), said icon crosspiece and icon fixing member being touch icons; said method further comprising the steps of showing, on said screen, a pictogram (17) that represents the workpiece (1) and positioning at least one of said crosspiece icon (18) and fixing member icon (19) by superimposing them on said pictogram (17) by drag-and-drop; said one or more data comprising one or more X-data associated with the desired positioning of said one or more crosspieces along said longitudinal direction (X) and one or more Y-data associated with the desired positioning of said one or more fixing members along said transverse direction (Y), said one or more X-data and one or more Y-data being determined on the basis of the position on said screen of said crosspiece icon (18) and fixing member icon (19) positioned on said pictogram (17).

5. Method according to claim 4, wherein said crosspiece icon (18) extends in length in a direction Y of said screen and is movable by drag-and-drop in a direction X of said screen that is transverse to said direction Y; said fixing member icon (19) remaining associated with said crosspiece icon in the movement of the crosspiece icon in the screen direction X, such that said fixing member icon moves with said icon crosspiece in the screen direction X; said fixing member icon being movable by drag-and-drop along said crosspiece icon in said direction Y.

6. Method according to claim 4 or 5, comprising the step of issuing an operator alarm signal if at least one fixing member icon is at least partially outside the workpiece pictogram.

7. Method according to any one of claims 4 to 6, wherein the workpiece comprises a panel and said workpiece pictogram represents at least one top plan view of the panel.

8. Apparatus, in particular for implementing the method of any preceding claim, comprising:
- a supporting plane (3) of a workpiece (1) made of wood or a material similar to wood;
- at least one operating unit (4) operating above said supporting plane and provided with one or more tools for performing machinings on the workpiece;
- a graphic user interface;
- a voice user interface;
- a programmable control unit (12) connected to said graphic user interface and to said voice user interface;
- a computer memory connected to said control unit (12);
- a medium that is readable by a computer and carries programme instructions that are executable by said control unit (12), wherein said programme instructions comprise the steps of:
showing, on a screen of said graphic user interface, at least one icon representing said supporting plane (3);
supplying, via a voice signal through said voice user interface, a prompt to confirm the position of said icon on said screen;
receiving confirmation of the position of said icon;
determining, on the basis of the position of said icon, one or more data associated with a positioning of said supporting plane (3);
entering said one or more data in said memory in response to said confirmation.

9. Medium that is readable by computer and carries instructions that are executable by a processor for implementing a method for assisting an operator to enter data into a computer memory connected to a control unit that governs an apparatus for machining a workpiece made of wood or a material similar to wood, said instructions comprising the steps of the method according to any one of claims 1 to 7.

10. Computer programme comprising instructions for implementing a method for assisting an operator to enter data into a computer memory connected to a control unit that governs an apparatus for machining a workpiece made of wood or a material similar to wood, said programme instructions comprising the steps of the method according to any one of claims 1 to 7.
